# EUROPEAN PATENT SPECIFICATION

(11) **EP 2 431 735 B1**
(45) Date of publication and mention of the grant of the patent: **17.08.2016**
(21) Application number: 11173748.2
(22) Date of filing: 13.07.2011
(51) Int. Cl.: G01N 22/00, G01V 3/12, G01V 8/00, G01V 5/00, G01N 21/62, G01S 13/88

(54) **Detection of Ammonium Nitrate or Trinitrotoluene (TNT) by exciting the sample with microwaves in the band of 75 - 110 GHz and by detecting emissions from the sample in the bands of 50-75 GHz and/or 500-750 GHz**
Erkennung von Ammoniumnitrat oder Trinitrotoluol (TNT), indem die Probe mit Mikrowellen im Bereich von 75 - 110 GHz angeregt wird und Emissionen der Probe im Bereich von 50-75 GHz und/oder 500-750 detektiert werden
Détection de Nitrate d'ammonium ou Trinitrotoluène par excitation d'un échantillon avec des micro-ondes dans le bande de 75 - 110 GHz et par détection des émissions de l'échantillon dans des bandes de 50-75 GHz et/ou 500-750 GHz

(30) Priority: 17.09.2010 US 884428
(43) Date of publication of application: 21.03.2012
(73) Proprietor: Raytheon Company, Waltham, MA 02451 (US)
(72) Inventor: White, Jack E., Santa Barbara, California 93103 (US); Brown, Kenneth W., Yucaipa, California 92399 (US); Kaufman, Steven L., Port Hueneme, California 93041 (US)
(74) Representative: Hill, Justin John

(56) References cited:
- WO-A2-2009/131808
- WO-A2-2015/069342
- US-A1- 2007 075 246
- US-A1- 2008 129 581
- US-A1- 2009 045 343
- US-B1- 7 795 583
- ROBERT FURSTENBERG ET AL: "Stand-off detection of trace explosives by infrared photo-thermal spectroscopy", TECHNOLOGIES FOR HOMELAND SECURITY, 2009. HST '09. IEEE CONFERENCE ON, IEEE, PISCATAWAY, NJ, USA, 11 May 2009 (2009-05-11), pages 465-471, XP031492280, ISBN: 978-1-4244-4178-5
- R.F. HUBBARD ET AL: "Long-range thermal imaging using a millimeter-wave source", THE 33RD IEEE INTERNATIONAL CONFERENCE ON PLASMA SCIENCE, 2006. ICOPS 2006. IEEE CONFERENCE RECORD, ABSTRACTS., 1 January 2006 (2006-01-01), pages 352-352, XP55010148, DOI: 10.1109/PLASMA.2006.1707225 ISBN: 978-1-42-440125-3
- DAVID A. ANDREWS ET AL: "Detection of concealed explosives at stand-off distances using wide band swept millimetre waves", PROCEEDINGS OF SPIE, 1 January 2008 (2008-01-01), pages 71170J-71170J-9, XP55010152, DOI: 10.1117/12.800382
- DOYLE R ET AL: "Stand-off detection of hidden threat objects on personnel at checkpoints and in public areas using active millimetre-wave imaging", PROCEEDINGS OF THE SPIE, THE INTERNATIONAL SOCIETY FOR OPTICAL ENGINEERING SPIE, USA, vol. 5619, 1 January 2004 (2004-01-01), pages 90-97, XP002391346, ISSN: 0277-786X, DOI: 10.1117/12.578056

## Description

### Field of the Invention

The currently described invention relates to systems and methods for detecting explosive materials.

### Background

Prior art methods for detecting explosive materials typically involve exciting a sample by physically contacting the sample with an ultrasound excitation source. A temperature sensor is typically used to monitor the thermal properties of the excited sample to determine if the sample material is an explosive material. These methods do not adequately distinguish between explosive materials and non-explosive materials.

The detection of explosives in a sample by irradiating the sample with electromagnetic waves and by analysing the electromagnetic response is known from various documents such as US7795583, WO2009131808 and US20080129581.

A need therefore exists for improved systems and methods for detecting explosive materials.

### Summary

Embodiments described herein relate generally to systems and methods for detecting explosives.

In one aspect, the present disclosure provides a system for detecting the explosive materials Ammonium Nitrate or Trinitrotoluene "TNT", the system comprising: an electromagnetic stimulation source to transmit at least W-band frequencies to interact with a sample; at least one electromagnetic emission sensor to detect electromagnetic emissions in response to the transmitted electromagnetic stimulation interacting with the sample, wherein the detected emissions comprise a different set of frequencies than the transmitted frequencies, and the detected emissions are in at least one of the frequency range 50-75 GHz and the frequency range 500-750 GHz; and a processor to provide command and control of the transmitted stimulation and to process detected emissions of the sample to detect the presence of Ammonium Nitrate or Trinitrotoluene (TNT).

In another aspect, the present dsiclosure provides a method for detecting the explosive materials Ammonium Nitrate or Trinitrotoluene "TNT", the method comprising: providing an electromagnetic stimulation source to transmit at least W-band frequencies to interact with a sample to produce electromagnetic emissions without causing detonation of the sample; detecting the electromagnetic emissions using at least one electromagnetic emission sensor, wherein the detected emissions comprise a different set of frequencies than the transmitted frequencies, and the detected emissions are in at least one of the frequency range 50-75 GHz and the frequency range 500-750 GHz; and using a processor to command and control the transmitted stimulation and to process the detected emissions of the sample.

In some embodiments, a plurality of electromagnetic sensors is used. Each of the plurality of electromagnetic sensors is configured to measure specific sub-bands within the millimeter or terahertz frequency spectrums. In some embodiments, each sub-band sensor is associated with a different type of explosive material. In some embodiments, W-Band stimulation is selected to minimize HE penetration depth.

Another embodiment features a method for detecting explosive Ammounium Nitrate or Trinitrotoluene (TNT) as defined in claim 4. The method includes transmitting electromagnetic stimulation to interact with the HE sample. The method also includes measuring electromagnetic emissions by the HE sample at a frequency that includes characteristics that are unique to the HE sample. This phenomenon is a response to the transmitted electromagnetic stimulation interacting with the HE sample, wherein the HE emissions are dramatically different than the stimulating frequencies. The HE emissions and characteristics of those emissions are unique to each HE type.

In some embodiments, the resultant HE emissions require a plurality of electromagnetic sensors. Each of the plurality of electromagnetic sensors is configured to detect a specific sub-band of frequencies either at millimeter wave or in the terahertz frequency range. In some embodiments, detecting the electromagnetic emissions will offer specific characteristics to identify HE material types.

In some embodiments, the processor collates and catalogs the detected emissions of the sample.

In some embodiments, each of a plurality of electromagnetic sensors is configured to detect a specific sub-band of frequencies in the millimeter wave and terahertz frequency spectrum. In some embodiments, each sub-band of frequencies and specific detected emission characteristics of an explosive material is associated with a different type of explosive material. In some embodiments, W-band electromagnetic stimulation is selected to minimize penetration depth of the electromagnetic stimulation into the sample.

Other aspects and advantages of the current invention will become apparent from the following detailed description, taken in conjunction with the accompanying drawings, illustrating the principles of the invention by way of example only.

### Brief Description of the Drawings

The foregoing features of various embodiments of the invention will be more readily understood by reference to the following detailed descriptions in the accompanying drawings, in which:
FIG. 1 is schematic illustration of a system for detecting explosive materials, according to an illustrative embodiment.
FIG. 2 is a flowchart of a method for detecting explosive materials, according to an illustrative embodiment.

### Detailed Description of Illustrative Embodiments

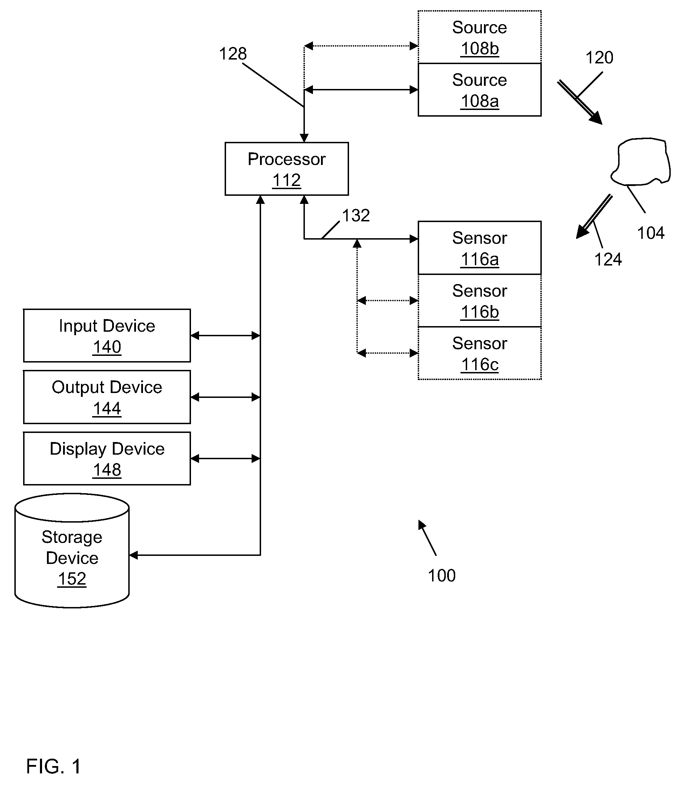

FIG. 1 is a schematic illustration of system 100 for detecting explosive materials, according to an illustrative embodiment. The system 100 includes a processor 112 that is coupled (e.g., digitally coupled) to at least one electromagnetic stimulation source 108a (generally 108 and includes at least one electromagnetic sensor 116a (generally 116)). The electromagnetic stimulation source 108 transmits W-band electromagnetic stimulation 120 to interact with a sample 104. W-band frequencies are generally considered to be frequencies between 75-110 GHz . Ka-band frequencies are generally considered to be frequencies between 26.5-40 GHz.

In some embodiments, electromagnetic stimulation source 108 transmits a combination of frequencies that includes both W-band and Ka-band emissions. In some embodiments, the system includes multiple electromagnetic stimulation sources (e.g., electromagnetic stimulation sources 108a and 108b). In one embodiment, each of the multiple electromagnetic stimulation sources transmits electromagnetic stimulation in either W band and/or Ka band. In some embodiments, a single electromagnetic stimulation source 108 transmits electromagnetic radiation in one specific frequency. In one embodiment, the electromagnetic stimulation source is a GaN-based multi-element array.

In some embodiments, it is desirable to operate the system 100 by selecting W-band stimulation that minimizes the penetration depth of electromagnetic stimulation 120 into the sample 104. In some embodiments, W-band stimulation is selected so that the radiated penetration is to a depth of less than about 0.020 inches (0.508 mm). The electromagnetic stimulation source 108 can be located at various ranges relative to the sample 104. In one embodiment, the output power of the electromagnetic stimulation source 108 is variable and the processor 112 controls the source 108 to provide the best detection capability.

The electromagnetic sensor 116a detects electromagnetic emission 124 by the sample 104 in response to the transmitted electromagnetic stimulation 120 interacting with the sample 104. The inventors determined that it is possible to discern the type of material in the sample 104 (e.g., type of explosive material) based on its signal characteristics (sample emissions 124). The radiated stimulation (stimulation 120) will be at a different frequency than the HE sample emissions (emissions 124).

In one embodiment, the emissions 124 are detected in the millimeter wave band of frequencies (generally considered to be between 30-300 GHz). In one embodiment, the emissions 124 are detected in the terahertz band of frequencies (generally considered to be frequencies between 300 GHz-3 THz). The emitted electromagnetic emissions 124 will exhibit characteristics that correspond to the presence of specific explosive material in the sample 104. In some embodiments, there is a combination of frequencies from the millimeter wave band and the terahertz band.

The processor 112 provides command and control 128 to the electromagnetic stimulation source 108 to specify the properties (e.g., frequency(s), bandwidth, duration, duty cycle, magnitude) of the electromagnetic radiation 120 transmitted to the sample 104. The processor 112 receives digitized responses 132 from the electromagnetic emission sensor 116a. The processor 112 collates and catalogs the HE emissions response signals 132 (emitted electromagnetic radiation) of an explosive material in the sample 104.

In some embodiments, a processor (e.g., the processor 112) analyzes the response signals 132 to determine the frequency and specific characteristics that may include specific frequencies, spectral variations and amplitude variations in the millimeter wave and terahertz frequency ranges, that are located in the response signals 132. In one embodiment, the system 100 determines the sub-band of frequencies that include one or more characteristic HE responses. Each sub-band and/or specific characteristic can be associated with a different type of explosive material. In some embodiments, the multiple electromagnetic emission sensors 116a, 116b and 116c are each selected to measure specific sub-bands of frequencies in the response signals 132. In this manner, each sensor 116 would be used to, for example, detect the presence of a different type of explosive material. Exemplary electromagnetic emission sensors that can be used in embodiments of the system include zero bias diode detectors (e.g., DXP Series gain horn detectors and heterodyne receivers manufactured by Virginia Diodes, Inc. of Charlottesville, VA and WR Series Gaussian optics (GAO) antennas manufactured by Millitech, Inc. of Northampton, MA).

The modules and devices described herein can, for example, utilize the processor 112 to execute computer executable instructions and/or include a processor to execute computer executable instructions (e.g., an encryption processing unit, a field programmable gate array processing unit). It should be understood that the system 100 can include, for example, other modules, devices, and/or processors known in the art and/or varieties of the illustrated modules, devices, and/or processors.

The input device 140 receives information associated with the system 100 (e.g., instructions from a user, instructions from another computing device) from a user (not shown) and/or another computing system (not shown). The input device 140 can include, for example, a keyboard or a scanner. The output device 144 outputs information associated with the system 100 (e.g., information to a printer (not shown), information to an audio speaker (not shown)).

The display device 148 displays information associated with the system 100 (e.g., status information, configuration information). The processor 112 executes the operating system and/or any other computer executable instructions for the system 100 (e.g., sends commands 128 to the electromagnetic stimulation source 108).

The storage device 152 stores the various information associated with the system 100 and its operation. The storage device 152 can store information and/or any other data associated with the system 100. The storage device 152 can include a plurality of storage devices. The storage device 152 can include, for example, long-term storage (e.g., a hard drive, a tape storage device, flash memory), short-term storage (e.g., a random access memory, a graphics memory), and/or any other type of computer readable storage.

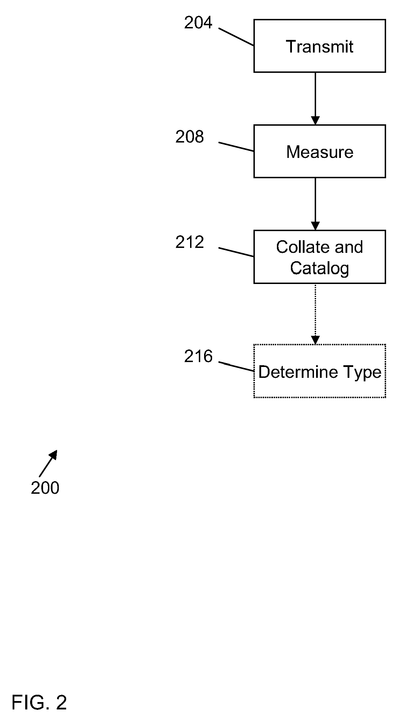

FIG. 2 is a flow diagram illustrating an exemplary method for detecting explosives. The method includes transmitting (step 204) electromagnetic stimulation to interact with a sample (using, for example, the source 108 of FIG. 1).

The method also includes detecting (step 208) electromagnetic emissions by the sample in response to the transmitted electromagnetic stimulation (using, for example, the sensor 116a of FIG. 1). The detected emissions comprises a different set of frequencies that the transmitted frequencies. In some embodiments, the emissions include millimeter wave frequencies, terahertz-band frequencies, or a combination of both. In some embodiments, the step of measuring electromagnetic radiation emitted by the sample (step 208) includes measuring electromagnetic radiation emitted by the sample with a plurality of electromagnetic radiation sensors, each of the plurality of electromagnetic sensors (e.g., sensors 116a, 116b, 116c of FIG. 1) configured to measure a specific sub-band of frequencies.

The method also includes processing (e.g., collating and cataloging) (step 212) the emitted electromagnetic radiation to detect the presence of an explosive material in the sample (using, for example, the processor 112 of FIG. 1). In some embodiments, analyzing the emitted electromagnetic radiation includes determining (step 216) the explosive material type. The explosive material type can be determined based on, for example, which sub-band of frequencies the electromagnetic radiation emitted by the sample lies within.

According to the invention an experiment was conducted to detect the presence of Ammonium Nitrate and TNT in two samples. The electromagnetic radiation source (e.g., source 108a of FIG. 1) transmitted W-band radiation (at 95 GHz) to two samples (one containing Ammonium Nitrate and one containing TNT). Two sensors were used as electromagnetic radiation sensors (e.g., sensors 116a and 116b). The first sensor was a model DXP-15-RPFW0 zero bias detector manufactured by Millitech, Inc. in the range of 50 - 75 GHz. The first sensor measured a signal (e.g., response signal 132) in this frequency range that exhibited a peak in the signal. The peak was indicative of the presence of Ammonium Nitrate in the sample. The second sensor was a model WR1.5ZBD zero bias detector manufactured by Virginia Diodes, Inc. in the range of 500 - 750 GHz. The second sensor measured a signal (e.g., response signal 132) in this frequency range that exhibited a peak in the signal. The peak was indicative of the presence of TNT in the sample. Samples lacking explosive material (and, specifically lacking Ammonium Nitrate and TNT) tested using the system did not exhibit any peaks in the response signals.

The above-described systems and methods can be implemented in digital electronic circuitry, in computer hardware, firmware, and/or software. The implementation can be as a computer program product (i.e., a computer program tangibly embodied in an information carrier). The implementation can, for example, be in a machine-readable storage device and/or in a propagated signal, for execution by, or to control the operation of, data processing apparatus. The implementation can, for example, be a programmable processor, a computer, and/or multiple computers.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by and an apparatus can be implemented as special purpose logic circuitry. The circuitry can, for example, be a FPGA (field programmable gate array) and/or an ASIC (application-specific integrated circuit). Modules, subroutines, and software agents can refer to portions of the computer program, the processor, the special circuitry, software, and/or hardware that implements that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can include, can be operatively coupled to receive data from and/or transfer data to one or more mass storage devices for storing data (e.g., magnetic, magneto-optical disks, or optical disks).

Data transmission and instructions can also occur over a communications network. Information carriers suitable for embodying computer program instructions and data include all forms of non-volatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

To provide for interaction with a user, the above described techniques can be implemented on a computer having a display device. The display device can, for example, be a cathode ray tube (CRT) and/or a liquid crystal display (LCD) monitor. The interaction with a user can, for example, be a display of information to the user and a keyboard and a pointing device (e.g., a mouse or a trackball) by which the user can provide input to the computer (e.g., interact with a user interface element). Other kinds of devices can be used to provide for interaction with a user. Other devices can, for example, be feedback provided to the user in any form of sensory feedback (e.g., visual feedback, auditory feedback, or tactile feedback). Input from the user can, for example, be received in any form, including acoustic, speech, and/or tactile input.

The above described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers. A client and a server are generally remote from each other and typically interact through a communication network. The relationship of client and server arises by virtue of computer programs running on the respective computers and having a client-server relationship to each other.

Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, bluetooth, code-division multiple access (CDMA) network, time division multiple access (TDMA) network, global system for mobile communications (GSM) network), and/or other circuit-based networks.

The computing device can include, for example, a computer, a computer with a browser device, a telephone, an IP phone, a mobile device (e.g., cellular phone, personal digital assistant (PDA) device, laptop computer, electronic mail device), and/or other communication devices. The browser device includes, for example, a computer (e.g., desktop computer, laptop computer) with a world wide web browser (e.g., Microsoft® Internet Explorer® available from Microsoft Corporation, Mozilla® Firefox available from Mozilla Corporation). The mobile computing device includes, for example, a Blackberry®.

Comprise, include, and/or plural forms of each are open ended and include the listed parts and can include additional parts that are not listed. And/or is open ended and includes one or more of the listed parts and combinations of the listed parts.

One skilled in the art will realize the invention may be embodied in other specific forms without departing from the essential characteristics thereof. The foregoing embodiments are therefore to be considered in all respects illustrative rather than limiting of the invention described herein. Scope of the invention is thus indicated by the appended claims, rather than by the foregoing description.

## Claims

1. A system (100) for detecting the explosive materials Ammonium Nitrate or Trinitrotoluene "TNT", the system (100) comprising:
an electromagnetic stimulation source (108a, 108b) to transmit at least W-band frequencies to interact with a sample (104);
at least one electromagnetic emission sensor (116a-c) to detect electromagnetic emissions (124) in response to the transmitted electromagnetic stimulation (120) interacting with the sample (104), wherein the detected emissions (124) comprise a different set of frequencies than the transmitted frequencies, and the detected emissions (124) are in at least one of the frequency range 50-75 GHz and the frequency range 500-750 GHz; and
a processor (112) to provide command and control of the transmitted stimulation (120) and to process detected emissions (124) of the sample (104) to detect the presence of Ammonium Nitrate or Trinitrotoluene (TNT).

2. The system of claim 1, wherein the processor (112) collates and catalogs the detected emissions (124) of the sample (104).

3. The system of any preceding claim, wherein W-band electromagnetic stimulation (120) is selected to minimize penetration depth of the electromagnetic stimulation (120) into the sample (104).

4. A method (200) for detecting the explosive materials Ammonium Nitrate or Trinitrotoluene "TNT", the method (200) comprising:
providing an electromagnetic stimulation source (108a, 108b) to transmit (204) at least W-band frequencies to interact with a sample (104) to produce electromagnetic emissions (124) without causing detonation of the sample (104);
detecting (208) the electromagnetic emissions (124) using at least one electromagnetic emission sensor (116a-c), wherein the detected emissions (124) comprise a different set of frequencies than the transmitted frequencies, and the detected emissions (124) are in at least one of the frequency range 50-75 GHz and the frequency range 500-750 GHz; and
using a processor (112) to command and control the transmitted stimulation (120) and to process the detected emissions (124) of the sample (104).

5. The method of claim 7, wherein the processor (116) collates and catalogs (212) the detected emissions (124) of the sample (104).

6. The method of any of claims 7 to 9, wherein a plurality of electromagnetic emission sensors (116a-c) are used to detect electromagnetic emissions (124) by the sample (104) and each of the plurality of electromagnetic sensors (116a-c) are configured to measure a specific sub-band of frequencies and their specific characteristic emissions.

7. The method of claim 10, wherein detecting (208) the electromagnetic emissions (124) comprises the determination (216) of the specific explosive material type, i.e. Ammonium Nitrate or Trinitrotoluene (TnT), of the sample (204).

## Patentansprüche

1. System (100) zum Nachweis der Explosivmaterialien Ammoniumnitrat oder Trinitrotoluol "TNT", wobei das System (100) Folgendes umfasst:
eine elektromagnetische Stimulationsquelle (108a, 108b) zum Übertragen von Frequenzen mindestens im W-Band-Spektrum, um mit einer Probe (104) zu interagieren;
mindestens einen elektromagnetischen Strahlungsaufnehmer (116a-c) zum Nachweis elektromagnetischer Strahlung (124) als Reaktion auf die übertragene elektromagnetische Stimulation (120), die mit der Probe (104) interagiert, wobei die nachgewiesene Strahlung (124) eine andere Reihe Frequenzen als die übertragenen Frequenzen aufweist und die nachgewiesene Strahlung (124) in mindestens einem der Frequenzbereiche 50-75 GHz und 500-750 GHz liegt; und
einen Prozessor (112) zum Steuern der übertragenen Stimulation (120) und zum Verarbeiten nachgewiesener Strahlung (124) der Probe (104) zum Nachweis des Vorhandenseins von Ammoniumnitrat oder Trinitrotoluol (TNT).

2. System nach Anspruch 1, wobei der Prozessor (112) die nachgewiesene Strahlung (124) der Probe (104) zusammenträgt und katalogisiert.

3. System nach einem der vorstehenden Ansprüche, wobei die elektromagnetische Stimulation (120) im W-Band-Spektrum so ausgewählt ist, dass die Eindringtiefe der elektromagnetischen Stimulation (120) in die Probe (104) minimiert ist.

4. Verfahren (200) zum Nachweis der Explosivmaterialien Ammoniumnitrat oder Trinitrotoluol "TNT", wobei das Verfahren (200) Folgendes umfasst:
Bereitstellen einer elektromagnetischen Stimulationsquelle (108a, 108b) zum Übertragen (204) von Frequenzen mindestens im W-Band-Spektrum, um mit einer Probe (104) zu interagieren, um elektromagnetische Strahlung (124) herzustellen, ohne ein Detonieren der Probe (104) zu verursachen;
Nachweis (208) der elektromagnetischen Strahlung (124) unter Verwendung von mindestens einem elektromagnetischen Strahlungsaufnehmer (116a-c), wobei die nachgewiesene Strahlung (124) eine andere Reihe Frequenzen als die übertragenen Frequenzen aufweist und die nachgewiesene Strahlung (124) in mindestens einem der Frequenzbereiche 50-75 GHz und 500-750 GHz liegt; und
Verwenden eines Prozessors (112) zum Steuern der übertragenen Stimulation (120) und zum Verarbeiten der nachgewiesenen Strahlung (124) der Probe (104).

5. Verfahren nach Anspruch 7, wobei der Prozessor (116) die nachgewiesene Strahlung (124) der Probe (104) zusammenträgt und katalogisiert (212).

6. Verfahren nach einem der Ansprüche 7 bis 9, wobei eine Vielzahl elektromagnetischer Strahlungsaufnehmer (116a-c) verwendet wird, um elektromagnetische Strahlung (124) der Probe (104) nachzuweisen, und jeder der Vielzahl elektromagnetischer Strahlungsaufnehmer (116a-c) dafür konfiguriert ist, ein bestimmtes Teilband von Frequenzen und ihre konkrete charakteristische Strahlung zu messen.

7. Verfahren nach Anspruch 10, wobei der Nachweis (208) der elektromagnetischen Strahlung (124) das Bestimmen (216) des konkreten explosiven Materialtyps, d. h. Ammoniumnitrat oder Trinitrotoluol (TNT), der Probe (204) umfasst.

## Revendications

1. Système (100) pour détecter la matière explosive nitrate d'ammonium ou trinitrotoluène « TNT », le système (100) comprenant :
une source de stimulation électromagnétique (108a, 108b) pour émettre au moins des fréquences en bande W afin d'interagir avec un échantillon (104) ;
au moins un capteur d'émissions électromagnétiques (116a à c) pour détecter des émissions électromagnétiques (124) en réponse à la stimulation électromagnétique émise (120) interagissant avec l'échantillon (104), dans lequel les émissions détectées (124) comprennent un ensemble de fréquences différent des fréquences émises, et les émissions détectées (124) sont dans la plage de fréquence entre 50 et 75 GHz et/ou dans la plage de fréquences entre 500 et 750 GHz ; et
un processeur (112) permettant de commander et de contrôler la stimulation émise (120) et permettant de traiter des émissions détectées (124) de l'échantillon (104) afin de détecter la présence de nitrate d'ammonium ou de trinitrotoluène (TNT).

2. Système selon la revendication 1, dans lequel le processeur (112) rassemble et catalogue les émissions détectées (124) de l'échantillon (104).

3. Système selon l'une quelconque des revendications précédentes, dans lequel la stimulation électromagnétique en bande W (120) est choisie pour réduire au minimum la profondeur de pénétration de la stimulation électromagnétique (120) dans l'échantillon (104).

4. Procédé (200) pour détecter la matière explosive nitrate d'ammonium ou trinitrotoluène « TNT », le procédé (200) comprenant les étapes suivantes :
fournir une source de stimulation électromagnétique (108a, 108b) pour émettre (204) au moins des fréquences en bande W pour interagir avec un échantillon (104) afin de produire des émissions électromagnétiques (124) sans entraîner la détonation de l'échantillon (104) ;
détecter (208) les émissions électromagnétiques (124) en utilisant au moins un capteur d'émissions électromagnétiques (116a à c), dans lequel les émissions détectées (124) comprennent un ensemble de fréquences différent des fréquences émises, et les émissions détectées (124) sont dans la plage de fréquence entre 50 et 75 GHz et/ou dans la plage de fréquences entre 500 et 750 GHz ; et
utiliser un processeur (112) pour commander et contrôler la stimulation émise (120) et pour traiter les émissions détectées (124) de l'échantillon (104).

5. Procédé selon la revendication 7, dans lequel le processeur (116) rassemble et catalogue (212) les émissions détectées (124) de l'échantillon (104).

6. Procédé selon l'une quelconque des revendications 7 à 9, dans lequel une pluralité de capteurs d'émissions électromagnétiques (116a à c) est utilisée pour détecter des émissions électromagnétiques (124) au moyen de l'échantillon (104) et chaque capteur électromagnétique parmi la pluralité de capteurs électromagnétiques (116a à c) est configuré pour mesurer une sous-bande de fréquences spécifique et leurs émissions caractéristiques spécifiques.

7. Procédé selon la revendication 10, dans lequel la détection (208) des émissions électromagnétiques (124) comprend la détermination (216) du type de matière explosive spécifique, à savoir le nitrate d'ammonium ou le trinitrotoluène (TnT), de l'échantillon (204).
